(19) Europäisches Patentamt
European Patent Office
Office européen des brevets

(11) **EP 3 715 627 B1**

(12) **EUROPÄISCHE PATENTSCHRIFT**

(45) Veröffentlichungstag und Bekanntmachung des Hinweises auf die Patenterteilung:
**04.01.2023  Patentblatt 2023/01**

(21) Anmeldenummer: **20165200.5**

(22) Anmeldetag: **24.03.2020**

(51) Internationale Patentklassifikation (IPC):
**F03D 7/02** *(2006.01)*     **F03D 17/00** *(2016.01)*

(52) Gemeinsame Patentklassifikation (CPC):
**F03D 17/00; F03D 7/0224;** F05B 2260/84;
F05B 2270/301; F05B 2270/3015; Y02E 10/72

(54) **VERFAHREN ZUR BESTIMMUNG EINER DEN DYNAMISCHEN AUFTRIEB BEEINFLUSSENDEN ANSTRÖMSITUATION AN WENIGSTENS EINEM ROTORBLATT**

METHOD FOR DETERMINING A FLOW SITUATION OF AT LEAST ONE ROTOR BLADE AFFECTING DYNAMIC LIFT

PROCÉDÉ DE DÉTERMINATION D'UNE SITUATION D'ÉCOULEMENT INFLUENÇANT LA PORTANCE DYNAMIQUE SUR AU MOINS UNE PALE DE ROTOR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.03.2019   DE 102019107966**

(43) Veröffentlichungstag der Anmeldung:
**30.09.2020   Patentblatt 2020/40**

(73) Patentinhaber: **Wobben Properties GmbH**
**26607 Aurich (DE)**

(72) Erfinder: **Napierala, Christian Frank**
**verstorben (DE)**

(74) Vertreter: **Eisenführ Speiser**
**Patentanwälte Rechtsanwälte PartGmbB**
**Postfach 31 02 60**
**80102 München (DE)**

(56) Entgegenhaltungen:
**EP-A1- 2 148 088**        **WO-A1-2006/039903**
**WO-A1-2012/122669**      **WO-A1-2015/185720**
**DE-A1-102013 103 150**

**Beschreibung**

Die vorliegende Erfindung ein betrifft Verfahren zur Bestimmung einer den dynamischen Auftrieb beeinflussenden Anströmsituation an wenigstens einem Rotorblatt für einen Rotor einer Windenergieanlage, wobei das Rotorblatt ein Profil mit einer Profiltiefe aufweist und zwischen einer Vorderkante und einer Hinterkante des Profils eine Druckseite und eine Saugseite ausgebildet wird. Weiterhin betrifft die vorliegende Erfindung ein Rotorblatt für einen Rotor einer Windenergieanlage, eine Windenergieanlage sowie einen Windpark.

Der Wirkungsgrad von Rotorblättern wird durch den Anströmwinkel, also dem Winkel zwischen Rotorblattprofilsehne und Anströmrichtung der Luft, bestimmt. Insbesondere bei Windenergieanlagen hängt der Anströmwinkel von der Rotorblattgeschwindigkeit -also der Rotordrehzahl- und der Windgeschwindigkeit ab. Grundsätzlich können die antreibenden Luftkräfte über die Beeinflussung des aerodynamischen Anströmwinkels am Profil des Rotorblattes durch Verkleinern der Rotorangriffsfläche oder durch eine Veränderung der effektiven Anströmgeschwindigkeit am Rotorblatt verringert werden. Eine Verkleinerung der Rotorangriffsfläche erfolgt durch eine Änderung des Rotorblatteinstellwinkels. Weiterhin beeinflusst die Anströmgeschwindigkeit den Wirkungsgrad, wobei die Anströmgeschwindigkeit von der nicht beeinflussbaren Windgeschwindigkeit und der Rotordrehzahl beeinflusst wird. Neben dem Rotorblatteinstellwinkel kann deshalb die Rotordrehzahl als Stellgröße zur Leistungsregelung herangezogen werden, sofern die Windkraftanlage eine drehzahlvariable Betriebsweise zulässt. In einer weiteren Variante kann auch eine Klappe beispielsweise im Bereich der Hinterkante genutzt werden, wobei ein Klappenwinkel der Klappe Verwendung findet, um den effektiven Anstellwinkel zu beeinflussen und somit Leistung, Lasten und/oder Schall zu regeln.

Für eine effiziente Regelung von Rotorblatteinstellwinkel, Rotordrehzahl und/oder Klappenwinkel und damit einer effizienten Leistungsregelung, ist die Kenntnis von effektivem Anströmwinkel und Anströmgeschwindigkeit im laufenden Betrieb der Windenergieanlage von großer Bedeutung. Im Folgenden wird lediglich von einer Leistungsregelung gesprochen, wobei die Überlegungen analog auf Schall- und/oder Lastregelungen oder Kombinationen davon übertragbar sind, wobei die Wahl letztendlich von der tatsächlichen Situation abhängt.

Das Deutsche Patent- und Markenamt hat in der Prioritätsanmeldung zu vorliegender Anmeldung folgenden Stand der Technik recherchiert: DE 102013103150 A1, EP 2 148088 A1, WO 2006/ 039903 A1, WO 2015/ 185720 A1.

Vor diesem Hintergrund war es eine Aufgabe der vorliegenden Erfindung, ein Verfahren der eingangs genannten Art weiterzubilden, welches eine effiziente Leistungs-, Lastenund/oder Schallregelung im Betrieb der Windenergieanlage ermöglicht, aber auch eine Windenergieanlage sowie einen Windpark anzugeben, die einen effizienteren Betrieb ermöglichen.

Die der Erfindung zugrundeliegende Aufgabe wird durch ein Verfahren mit den Merkmalen nach Anspruch 1 gelöst. Gemäß dem Anspruch 1 wird ein Verfahren zur Bestimmung einer den dynamischen Auftrieb beeinflussenden Anströmsituation an wenigstens einem Rotorblatt für einen Rotor einer Windenergieanlage vorgeschlagen, wobei das Rotorblatt ein Profil mit einer Profiltiefe aufweist und zwischen einer Vorderkante und einer Hinterkante des Profils eine Druckseite und eine Saugseite ausgebildet wird. Dabei wird in wenigstens einem Abschnitt des Rotorblattes in Längsrichtung an der Rotorblattoberfläche entlang einer Profilsehne des Rotorblattes an zumindest drei zueinander beabstandeten Druckmessstellen jeweils eine Druckmessung durchgeführt, wobei mittels eines numerischen Verfahrens oder durch Messungen über den Verlauf des Profils des Rotorblattes auftretende Druckbeiwerte bestimmt werden, und aufgrund der im Betrieb durchgeführten Druckmessungen und der vorab bestimmten Druckbeiwerte für die jeweilige Druckmessstelle wenigstens eine Anströmgeschwindigkeit und ein Anströmwinkel bestimmt werden.

Durch die erfindungsgemäße Bestimmung von Anströmgeschwindigkeit und Anströmwinkel im laufenden Betrieb der Windenergieanlage lassen sich hiervon abhängige Betriebsparameterwie der Rotorblatteinstellwinkel bzw. Pitchwinkel sowie die Rotordrehzahl und/oder der Klappenwinkel einstellen, um eine effiziente Leistungs-, Lasten und/oder Schallregelung zu bewirken.

Der wenigstens eine Abschnitt des Rotorblattes, in welchem die Druckmessungen durchgeführt wird, ist möglichst schmal gewählt, d.h. der Abschnitt weist bezogen auf eine Längsachse des Rotorblattes eine geringe axiale Erstreckung auf, innerhalb derer die Druckmessstellen im Wesentlichen fluchtend hintereinander angeordnet werden. Vorzugsweise weist der wenigstens Abschnitt eine axiale Erstreckung auf, die einem einzigen Profilschnitt entsprechen kann.

In Kenntnis insbesondere des aktuellen Anströmwinkels, welcher den Winkel zwischen dem Rotorblatt und der im Betrieb tatsächlich anströmenden Luftströmung, also unter Berücksichtigung der Bewegung des Rotorblatts beschreibt, kann auf eine Änderung des Anströmwinkels durch eine Änderung des Rotorblatteinstellwinkels reagiert werden.

Das numerische Verfahren zum Bestimmen der Druckbeiwerte kann während des Betriebs der Windenergieanlage oder auch alternativ oder zusätzlich vorab mittels vorab bestimmter Druckmessdaten für den Abschnitt des Rotorblattes bestimmt werden. Üblicherweise baut das numerische Verfahren auf Messwerten auf und verwendet diese. Besonders bevorzugt ist es, die Druckmessungen während des Betriebes durchzuführen und die Druckbeiwerte vorab zu bestimmen. Damit ist eine Auswertung während des Betriebes besonders einfach möglich.

Vorzugsweise erfolgt die Durchführung der Druckmessungen und die damit verbundene Bestimmung von Anströmgeschwindigkeit und Anströmwinkel zyklisch, wobei zyklisch im Sinne einer fortlaufenden Durchführung mit konstanter, aber auch mit sich verändernder Zykluszeit zu verstehen ist. Dies erlaubt eine zeitnahe Anpassung des Blatteinstellwinkels und/oder der Rotordrehzahl, um fortlaufend auf eine sich ändernde Anströmsituation reagieren zu können.

Dabei kann die Verteilung von Druckbeiwerten über den Verlauf des Profils anhand von mehreren im Betrieb der Windenergieanlage zu erwartenden Anströmgeschwindigkeiten und/oder Anströmwinkeln bestimmt werden, insbesondere mittels einer numerischen Simulation bestimmt werden.

Bevorzugt können aufgrund der durchgeführten Druckmessungen und der, insbesondere numerisch, bestimmten Druckbeiwerte für die jeweilige Druckmessstelle zwei Differenzdrücke bestimmt werden, wobei die Anströmgeschwindigkeit und der Anströmwinkel basierend auf den Differenzdrücken bestimmt werden.

Insbesondere kann ein Kennfeld für die Anströmgeschwindigkeit und ein Kennfeld für den Anströmwinkel erstellt werden, wobei die Eingangsgrößen des jeweiligen Kennfeldes die bestimmten Differenzdrücke sind. Die für die im laufenden Betrieb zur Ansteuerung von Blatteinstellwinkel und/oder Rotordrehzahl und/oder Klappenwinkel relevanten Werte für die Anströmgeschwindigkeit und den Anströmwinkel lassen sich somit einfach aus dem jeweiligen Kennfeld auslesen.

Vorzugsweise werden die Kennfelder in dem Fall, in dem Klappen als aerodynamische Anbauteile zum Einsatz kommen, nicht für alle möglichen Klappenausschläge des Profils erstellt, sondern auf eine diskrete Anzahl an Klappenwinkel bzw. Ausschlägen, die vorzugsweise vorab festlegt sind, reduziert. Alternativ sind natürlich auch beliebig fein aufgelöste Unterteilungen der Klappenausschläge möglich.

Dabei können zumindest drei der zumindest drei Druckmessungen auf der Saugseite des Rotorblattes durchgeführt werden, um die Anströmsituation zu bestimmen. Vorzugsweise werden insgesamt zumindest sechs Druckmessungen an unterschiedlichen Stellen durchgeführt.

Bevorzugt kann eine erste Druckmessstelle mit einem Abstand von 5% bis 25% der Profiltiefe zur Vorderkante des Rotorblattes, vorzugsweise von etwa 10% der Profiltiefe zur Vorderkante des Rotorblattes, angeordnet werden. Die erste Druckmessstelle befindet sich vorzugsweise im Bereich des größten Unterdrucks auf der Saugseite des Rotorblattes.

Mit dem Begriff etwa wird hier und nachfolgend ein Bereich um den Wert verstanden, der ein Intervall von höchstens 10% des Gesamtwertes umschreibt. Beispielsweise ist somit für den Wert von etwa 10% ein Bereich von 5% bis 15% der Profiltiefe zu verstehen. Vorzugsweise ist der Bereich deutlich schmaler und bezieht sich auf ein Intervall von höchstens 6%, besonders bevorzugt von höchstens 4% des Maximalwertes.

Eine zweite Druckmessstelle kann mit einem Abstand von 10 bis 30% der Profiltiefe zu der ersten Druckmessstelle beabstandet angeordnet werden. Somit kann gewährleistet werden, dass sich eine hinreichend große Druckdifferenz zwischen der ersten Druckmessstelle und der zweiten Druckmessstelle einstellt.

Vorzugsweise können die erste Druckmessstelle und die zweite Druckmessstelle innerhalb eines Bereiches von 50% der Profiltiefe angeordnet werden.

Eine dritte Druckmessstelle kann in einem Bereich von 10%, vorzugsweise in einem Bereich von höchstens 5%, der Profiltiefe zur Hinterkante beabstandet angeordnet werden.

Der gegenüber dem Abstand zwischen der ersten Druckmessstelle und der zweiten Druckmessstelle größere Abstand der dritten Druckmessstelle zur zweiten Druckmessstelle soll die geringe Druckdifferenz zwischen diesen beiden Druckmessstellen in dem hinteren Teil des Profils berücksichtigen.

Vorteilhaft ist es, dass die Anordnung der zumindest drei Druckmessstellen derart gewählt wird, dass eine Maximierung der Fläche der Kennfelder erreicht wird. Durch die Maximierung der Fläche der Kennfelder lässt sich der Einfluss von Messungenauigkeiten und Interpolationsfehlern auf das erfindungsgemäße Verfahren minimieren.

Bevorzugt kann das Verfahren für mehrere Abschnitte des Rotorblattes an unterschiedlichen Positionen in Längsrichtung ausgeführt werden. Insbesondere können die Abschnitte in im Wesentlichen gleichmäßigen Abständen in Längsrichtung des Rotorblattes verteilt vorgesehen werden. Auf diese Weise findet auch eine Veränderung der Anströmverhältnisse in Längsrichtung des Rotorblattes bei der Bestimmung von Anströmgeschwindigkeit und Anströmwinkel Berücksichtigung.

Vorzugsweise sind die mehreren Abschnitte über das gesamte Rotorblatt verteilt, mindestens erstrecken sie sich über mindestens 50%, bevorzugt 75% der gesamten Rotorblattlänge. Damit ist eine besonders genaue Bestimmung der Anströmsituation entlang des gesamten Rotorblattes möglich.

Insbesondere kann die Anordnung der Druckmessstellen an den jeweiligen Abschnitten des Rotorblattes an unterschiedlichen Positionen in Projektion auf die Profilsehne vorgesehen sein. Bevorzugt kann die Anordnung derart gewählt sein, dass die Maximierung der Fläche der Kennfelder für sämtliche Positionen der Druckmessstellen entlang des Rotorblattes erfüllt ist.

Die Erfindung löst ferner die ihr zugrunde liegende Aufgabe bei einer Windenergieanlage, die einen aerodynamischen Rotor mit in ihrem Rotorblatteinstellwinkel verstellbaren Rotorblättern sowie eine Einrichtung zum Steuern und/oder Regeln umfasst, indem die Einrichtung dazu eingerichtet ist, zumindest die Rotorblatteinstellwinkel der Rotorblätter in Abhängigkeit von einer Anströmgeschwindigkeit und einem Anströmwinkel einzustellen, die nach einem zur Erfindung gehörenden Verfahren bestimmbar sind. Die Einrichtung zum Steuern und/oder Regeln kann ferner dazu eingerichtet sein, auch die Rotordrehzahl in Abhängigkeit von der Anströmgeschwindigkeit und dem Anströmwinkel einzustellen, die nach dem erfindungsgemäßen Verfahren bestimmbar sind. Schließlich kann die Einrichtung zum Steuern und/oder Regeln alternativ oder zusätzlich dazu eingerichtet sein, einen Klappenwinkel einer an den Rotorblättern angebrachten Klappe, insbesondere einer Hinterkantenklappe, in Abhängigkeit von der Anströmgeschwindigkeit und dem Anströmwinkel einzustellen, die nach dem erfindungsgemäßen Verfahren bestimmbar sind.

Des Weiteren kann der Rotor der Windenergieanlage wenigstens ein Rotorblatt aufweisen, wobei das Rotorblatt ein Profil mit einer Profiltiefe aufweist und zwischen einer Vorderkante und einer Hinterkante des Profils eine Druckseite und eine Saugseite ausgebildet ist, wobei entlang einer Profilsehne des Rotorblattes zumindest drei mit einem Abstand zueinander angeordnete Druckmessstellen vorgesehen sind, dass mittels eines numerischen Verfahrens über den Verlauf des Profils des Rotorblattes auftretende Druckbeiwerte bestimmbar sind, und dass aufgrund der durchgeführten Druckmessungen und der für die jeweilige Druckmessstelle bestimmten Druckbeiwerte zwei Differenzdrücke bestimmbar sind, mittels derer eine den dynamischen Auftrieb beeinflussende Anströmsituation an dem Rotorblatt bestimmbar ist.

Vorzugsweise sind die an diskreten Stellen des Rotorblattes auftretenden Druckbeiwerte alternativ oder zusätzlich mittels Messungen über den Verlauf des Profils bestimmbar.

Hierzu können zumindest drei der zumindest drei Druckmessstellen auf der Saugseite des Rotorblattes angeordnet sein.

Dabei kann eine erste Druckmessstelle mit einem Abstand von 5% bis 25% der Profiltiefe zur Vorderkante des Rotorblattes, vorzugsweise von etwa 10% der Profiltiefe zur Vorderkante des Rotorblattes, angeordnet sein.

Eine zweite Druckmessstelle kann mit einem Abstand von 10 bis 30% der Profiltiefe zu der ersten Druckmessstelle beabstandet angeordnet sein.

Bevorzugt können die erste Druckmessstelle und die zweite Druckmessstelle innerhalb eines Bereiches von 50% der Profiltiefe angeordnet sein.

Eine dritte Druckmessstelle kann in einem Bereich von 10%, vorzugsweise in einem Bereich von höchstens 5%, der Profiltiefe zur Hinterkante beabstandet angeordnet sein.

Des Weiteren betrifft die Erfindung auch einen Windpark mit mehreren Windenergieanlagen, welche gemäß einer der vorstehend beschriebenen bevorzugten Ausführungsformen der Erfindung ausgebildet sind.

Die zum erfindungsgemäßen Verfahren und zum Rotorblatt beschriebenen, bevorzugten Ausführungsformen bzw. Weiterbildungen sind zugleich auch bevorzugte Ausführungsformen der erfindungsgemäßen Windenergieanlage sowie des erfindungsgemäßen Windparks.

Die Erfindung wird im Folgenden anhand eines möglichen Ausführungsbeispiels unter Bezugnahme auf die beigefügten Figuren näher beschrieben. Hierbei zeigen:

Fig. 1    zeigt schematisch eine Windenergieanlage in einer perspektivischen Darstellung;

Fig. 2    schematisch und exemplarisch ein Rotorblatt einer Windenergieanlage;

Fig. 3    schematisch und exemplarisch einen Profilschnitt eines Rotorblattes;

Fig. 4    exemplarisch ein Kennfeld für einen Anströmwinkel am Profilschnitt;

Fig. 5    exemplarisch ein Kennfeld für eine Anströmgeschwindigkeit am Profilschnitt.

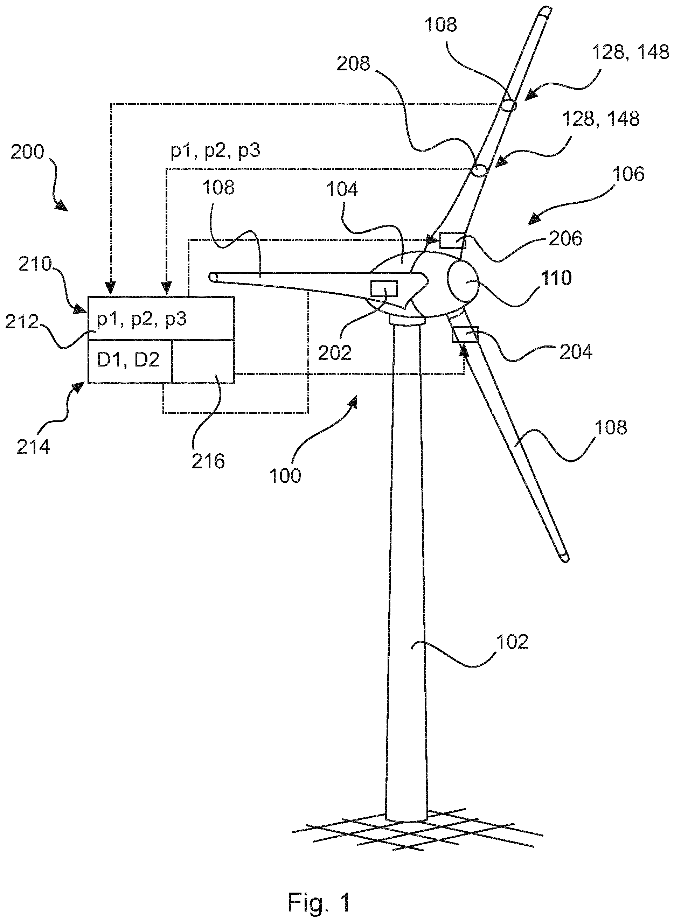

Fig. 1 zeigt eine schematische Darstellung einer Windenergieanlage 100 gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage 100 durch den Wind in eine Drehbewegung versetzt und dreht somit auch einen elektrodynamischen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 108 können durch Pitchmotoren an den Rotorblattwurzeln der jeweiligen Rotorblätter 108 verändert werden.

Die Windenergieanlage 100 ist vorliegend mit einer Einrichtung 200 zum Steuern und/oder Regeln ausgestaltet. Mittels der Einrichtung 200 wird eine Stelleinrichtung mit entsprechender Aktorik 202, 204, 206 für beispielsweise die Rotorblätter 108 angesteuert. Die Aktorik 202, 204, 206 ist beispielsweise in den Rotorblättern 108 angeordnet gezeigt, kann in anderen Ausführungen aber auch an anderen Stellen, insbesondere innerhalb des Spinners 110 als Teil der Rotornabe, ausgebildet sein. Die Aktorik kann einen Einstellwinkel der Rotorblätter 108, genannt Pitchwinkel, verändern. Alternativ oder zusätzlich kann die Stelleinrichtung auch an den Rotorblättern 108 angeordnete aerodynamische Anbauteile, insbesondere Klappen wie Hinterkantenklappen, ansteuern und beispielsweise den Klappenwinkel kontrollieren. Auch kann die Einrichtung 200 eine Rotordrehzahl steuern.

Die Einrichtung 200 erhält Messinformationen von zumindest einer Sensoranordnung 208 mit zumindest drei Drucksensoren, welche an ein Messmodul 210 der Einrichtung 200 gehen. Die drei Drucksensoren der zumindest einen Sensoranordnung 208 sind an einem Abschnitt 148 des Rotorblattes 108 angeordnet. Das Messmodul 210 hat eine Ermittlungseinheit 212 zur Ermittlung von Drücken $p_1$, $p_2$, $p_3$, die an drei Druckmessstellen auftreten. Eine Recheneinheit 214 bestimmt anhand der ermittelten Drücke $p_1$, $p_2$, $p_3$ zwei Druckdifferenzen $D_1$, $D_2$.

Der Recheneinheit 214 ist eine Speichereinheit 216 zugeordnet. Es können auch an zwei oder allen Rotorblättern 108 zumindest eine Sensoranordnung 208 mit zumindest drei Drucksensoren angeordnet sein. Insbesondere können an einem Rotorblatt 108 mehrere Sensoranordnungen 208 angebracht sein. Diese können gleichmäßig beabstandet zueinander in Längsrichtung L des Rotorblattes 108 verteilt angeordnet sein. Ebenso sind natürlich auch unterschiedliche Abstände in Längsrichtung L vorgesehen sein, wobei diese durch die Recheneinheit 214 angemessen berücksichtig werden.

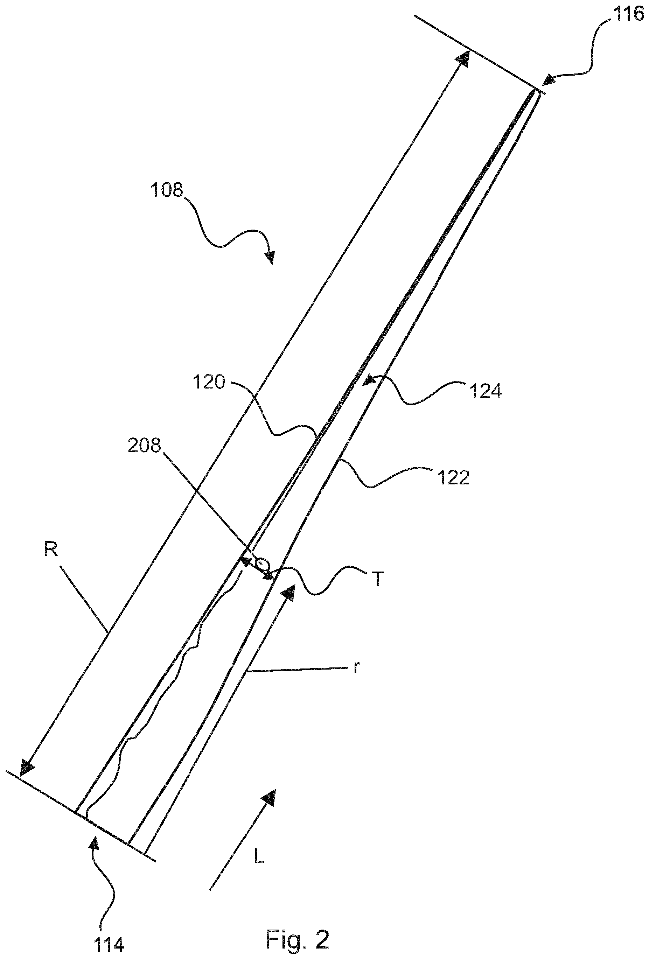

Fig. 2 zeigt eine schematische Ansicht eines einzelnen Rotorblattes 108 mit einer Vorderkante 120 sowie einer Hinterkante 122. Abgebildet ist eine Draufsicht auf eine Saugseite 124 des Rotorblattes 108, die gegenüberliegende Druckseite 126 ist in der Ansicht nicht sichtbar.

Das Rotorblatt 108 weist eine Rotorblattwurzel 114 und eine Rotorblattspitze 116 auf. Die Länge zwischen der Rotorblattwurzel 114 und der Rotorblattspitze 116 wird als Rotorblattlänge R entlang einer Längsrichtung L bezeichnet. Der Abstand zwischen der Vorderkante 120 und der Hinterkante 122 des Rotorblattes 108 wird als Profiltiefe T bezeichnet. An der Rotorblattwurzel 114 oder im Allgemeinen in dem Bereich nahe der Rotorblattwurzel 114 weist das Rotorblatt 108 eine große Profiltiefe T auf. An der Rotorblattspitze 116 ist die Profiltiefe T dagegen sehr viel kleiner.

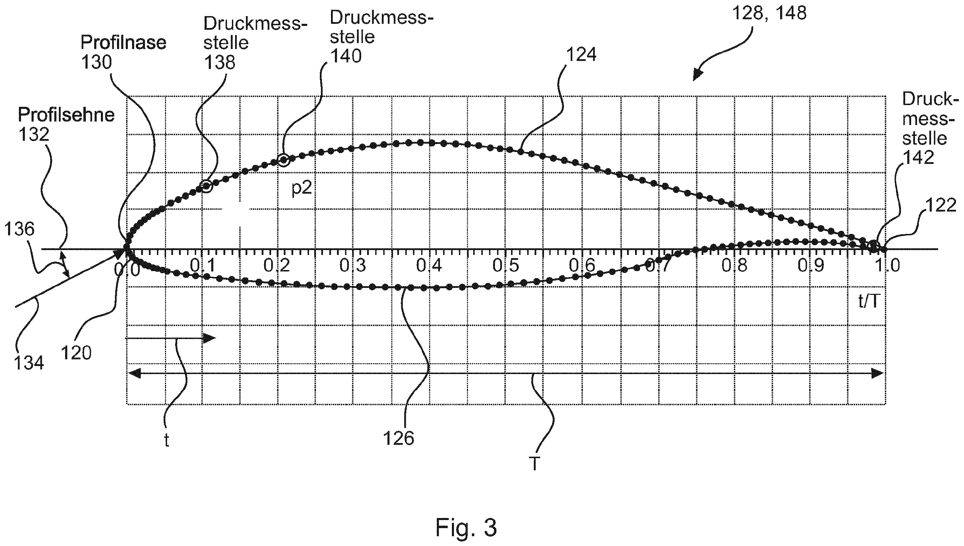

Fig. 3 zeigt schematisch einen Profilschnitt 128 des Rotorblattes 108 in einem Abstand r zur Rotorblattwurzel 114. Mit dem Bezugszeichen 132 ist eine Profilsehne bezeichnet, welche als gedachte Linie eine Profilnase 130 an der der Vorderkante 120 mit der Hinterkante 122 des Rotorblattes 108 verbindet. Ein Pfeil veranschaulicht eine Anströmgeschwindigkeit 134, die an dem Profilschnitt 128 des Rotorblattes 108 im Abstand r zur Rotorblattwurzel 114 aus der vektoriellen Überlagerung von Windgeschwindigkeit mit einer Umfangsgeschwindigkeit resultiert. Die sich ergebende Anströmgeschwindigkeit 134 bildet mit der Profilsehne 132 einen Anströmwinkel 136.

Zur Bestimmung einer den dynamischen Auftrieb beeinflussenden Anströmsituation an dem Rotorblatt 108 ist vorgesehen, dass in wenigstens einem schmalen, insbesondere streifenförmigen oder linienförmigen, Abschnitt 148 des Rotorblattes 108 in Längsrichtung L an der Rotorblattoberfläche entlang der Profilsehne 132 an zumindest drei zueinander beabstandeten Druckmessstellen 138, 140 142 jeweils eine Druckmessung durchgeführt wird. Der wenigstens eine Abschnitt 148 des Rotorblattes 108, in welchem die drei Druckmessstellen 138, 140 142 angeordnet werden, ist möglichst schmal ausgeführt, d.h. der Abschnitt 148 hat eine möglichst geringe Erstreckung in Längsrichtung L. Vorzugsweise kann der Abschnitt 148 als ein einziger Profilschnitt 128 sein.

Die Anordnung der zumindest drei Druckmessstellen 138, 140 142 auf der Saugseite 124 des Rotorblattes 108 erfolgt jeweils in einem Abstand zur Vorderkante 120 mit einer relativen Profiltiefe t/T, die als Verhältnis einer Position t zwischen der Vorderkante 120 und der Hinterkante 122 und der Profiltiefe T des Rotorblattes 108 definiert ist. Dabei ist eine erste Druckmessstelle 138 mit einem Abstand von etwa 10% bis 15% der Profiltiefe T bzw. einer relativen Profiltiefe t/T zwischen 0,1 und 0,15 zur Vorderkante 120 angeordnet. Eine zweite Druckmessstelle 140 ist mit einem Abstand von etwa 10 bis 30% der Profiltiefe T bzw. einer relativen Profiltiefe t/T zwischen 0,1 und 0,3 zu der ersten Druckmessstelle 138 beabstandet angeordnet. Eine dritte Druckmessstelle 142 ist in einem Bereich von etwa 10%, vorzugsweise in einem Bereich von höchstens 5%, der Profiltiefe T bzw. einer relativen Profiltiefe t/T von 0,1, insbesondere in einem Bereich von höchstens 0,05 der relativen Profitiefe, zur Hinterkante 122 beabstandet angeordnet. Die erste Druckmessstelle 138 und die zweite Druckmessstelle 140 werden vorzugsweise innerhalb eines Bereiches von etwa 50% der Profiltiefe T ausgehend von der Vorderkante 120 des Rotorblattes 108 angeordnet. Zumindest drei der zumindest drei Druckmessstellen 138, 140, 142 sind auf der Saugseite 124 des Rotorblattes 108 angeordnet.

Mit Hilfe der zumindest drei auf dem Abschnitt 148 des Rotorblattes 108 angeordneten Druckmessstellen 138, 140, 142 soll die den dynamischen Auftrieb im laufenden Betrieb der Windenergieanlage 100 beeinflussende Anströmsituation, d.h. die Anströmgeschwindigkeit 134 und der Anströmwinkel 136, bestimmt werden. Hierzu werden zwischen der ersten Druckmessstelle 138 und zweiten Druckmessstelle 140 ein erster Differenzdruck $D_1$ und zwischen der zweiten Druckmessstelle 140 und der dritten Druckmessstelle 142 ein zweiter Differenzdruck $D_2$ bestimmt. Die Differenzdrücke $D_1$ und $D_2$ bestimmen sich wie folgt:

$$D_1 = p_1 - p_2 \text{ und } D_2 = p_2 - p_3 \qquad (1).$$

Darin sind $p_1$, $p_2$ und $p_3$ die an den jeweiligen Druckmessstellen 138, 140, 142 entlang des Profilschnitts 128 mittels der Drucksensoren der Sensoranordnung 208 gemessenen Drücke.

Mittels eines numerischen Verfahrens zur Profilsimulation des Rotorblattes 108, beispielsweise dem Programm "xfoil", werden die jeweiligen über den Verlauf des Profils des Rotorblattes 108 auftretenden Druckbeiwerte $c_p$ in dem Abschnitt 148 bestimmt. Der Druckbeiwert $c_p$ ist folgendermaßen definiert:

$$c_p = \frac{p - p_\infty}{\frac{1}{2}\rho v_\infty^2} \qquad\qquad (2).$$

Darin sind p der an einem Punkt gemessene statisch Druck, $p_\infty$ der statische Druck in der Anströmung, p die Dichte der umgebenden Luft, v der lokale Geschwindigkeitsbeitrag und $v_\infty$ die Anströmgeschwindigkeit.

Somit lässt sich der Druck p wie folgt berechnen:

$$p = p_\infty + \frac{1}{2} * \rho * v^2 * c_p \qquad\qquad (3).$$

Aus den Gleichungen (1) und (3) ergibt sich:

$$D_1 = p_1 - p_2 = \frac{1}{2}\rho v^2 \cdot (c_{p,1} - c_{p,2}) \qquad\qquad (4)$$

und

$$D_2 = p_2 - p_3 = \frac{1}{2}\rho v^2 \cdot (c_{p,2} - c_{p,3}) \qquad\qquad (5).$$

Darin sind $c_{p,1}$, $c_{p,2}$ und $c_{p,3}$ die jeweils numerisch berechneten Druckbeiwerte an der Position der jeweiligen Druckmessstelle 138,140, 142 entlang des Profilschnittes 128 bzw. Abschnitts148.

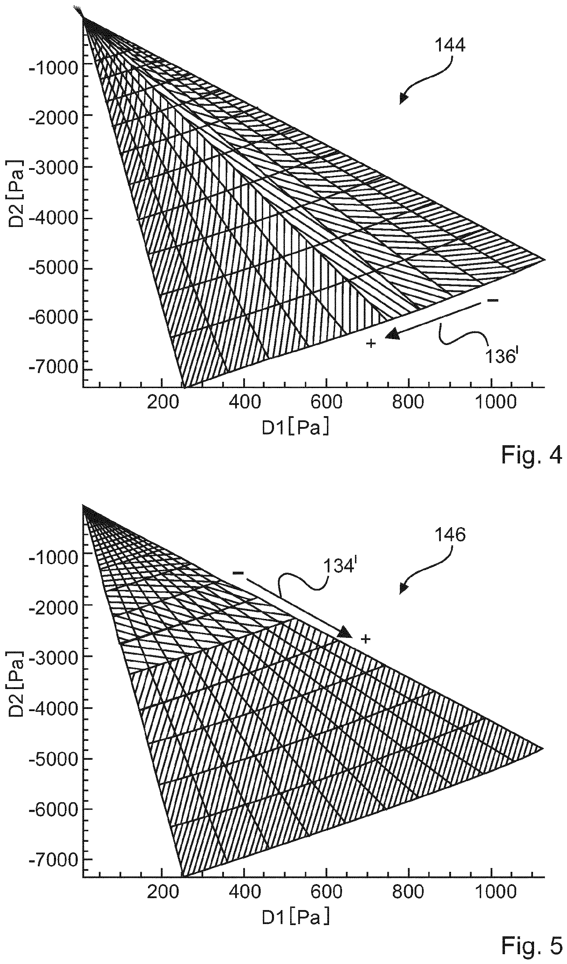

Die Verteilung von Druckbeiwerten $c_p$ über den Verlauf des Profils des Rotorblattes 108 wird anhand von mehreren im Betrieb der Windenergieanlage 100 sinnvollerweise zu erwartenden Anströmgeschwindigkeiten 134' und Anströmwinkeln 136' bestimmt. Die Bestimmung der Verteilung der Druckbeiwerte $c_{p,1}$, $c_{p,2}$ und $c_{p,3}$ kann insbesondere mittels einer numerischen Simulation durchgeführt werden. Durch die Simulation der Verteilung der Druckbeiwerte $c_{p,1}$, $c_{p,2}$ und $c_{p,3}$ für eine Reihe von im Betrieb der Windenergieanlage 100 sinnvollerweise zu erwartender Anströmgeschwindigkeiten 134' und Anströmwinkel 136' und unter Anwendung der weiter oben stehenden Relationen gemäß den Gleichungen (4) und (5) ergeben sich für die zu erwartenden Anströmgeschwindigkeiten 134' und die zu erwartenden Anströmwinkel136' jeweils ein in der Speichereinheit 216 hinterlegbares Kennfeld 144, 146, wie sie in den Fig. 4 und 5 beispielhaft dargestellt sind, aus denen die zu bestimmenden Größen Anströmgeschwindigkeit 134 und Anströmwinkel 136 nach Durchführung der Druckmessungen in den zumindest drei Druckmessstellen 138,140, 142 und anschließend erfolgter Bestimmung der Differenzdrücke $D_1$ und $D_2$ ermittelt werden können.

Durch eine geeignete Verteilung der Druckmessstellen 138,140, 142 in dem wenigstens einen Abschnitt 148 des Rotorblattes 108 in Längsrichtung L an der Rotorblattoberfläche entlang der Profilsehne 132 lässt sich die Fläche der Kennfelder 144, 146 vergrößern. Die Anordnung der zumindest drei Druckmessstellen138,140, 142 wird bevorzugt derart gewählt, dass eine Maximierung der Fläche der numerisch bestimmten Kennfelder 144, 146 erreicht wird, wodurch die Anfälligkeit des Verfahrens für Messungenauigkeiten und Interpolationsfehler minimiert werden kann.

Fig. 4 zeigt exemplarisch das Kennfeld 146 für die zu erwartenden Anströmwinkel 136' an dem Profilschnitt 128 respektive Abschnitt 148. Fig. 5 zeigt exemplarisch das Kennfeld 144 für die zu erwartenden Anströmgeschwindigkeiten 134' an dem Profilschnitt 128. Die nach den erfolgten Druckmessungen bestimmten Differenzdrücke $D_1$ und $D_2$ bilden die Eingangsgrößen des erstellten Kennfeldes 146 für die Anströmgeschwindigkeiten 134' und des erstellten Kennfeldes 144 für die Anströmwinkel 136'. Aus den jeweiligen Kennfeldern 144, 146 lassen sich nach erfolgter Bestimmung der Differenzdrücke $D_1$, $D_2$ die Anströmgeschwindigkeit 134 und der Anströmwinkel 136 auslesen. Mit abnehmenden Differenzdruck $D_1$ und abnehmendem Differenzdruck $D_2$ nimmt der Anströmwinkel 136' zu, wie in Fig. 4 dargestellt. Mit zunehmenden Differenzdruck $D_1$ und abnehmendem Differenzdruck $D_2$ nimmt die Anströmgeschwindigkeit 134' zu, wie in Fig. 5 dargestellt.

Die Recheneinheit 214 ist in der Lage, aus den in der Speichereinheit 216 hinterlegbaren Kennfeldern 144, 146 die Anströmgeschwindigkeit 134 und den Anströmwinkel 136 am Profilschnitt 128 zu bestimmen und in Abhängigkeit von den bestimmten Werten für die Anströmgeschwindigkeit 134 und den Anströmwinkel 136 zumindest den Blatteinstellwinkel einzustellen, um auf Änderungen des Anströmwinkels 136 zu reagieren. Die Anpassung zumindest des Blatteinstellwinkels und/oder Klappenausschlags erfolgt in der Weise, dass unter Berücksichtigung der herrschenden Anströmsituation ein optimierter Betrieb der Windenergieanlage 100 gegeben ist.

Das Verfahren wird vorzugsweise für mehrere Abschnitte 148 des Rotorblattes 108 an in Längsrichtung L gesehen unterschiedlichen Positionen ausgeführt. Vorzugsweise sind die Abschnitte 148 über das gesamte Rotorblatt 108 verteilt vorgesehen, wodurch eine exaktere Bestimmung der Anströmsituation ermöglicht wird. Insbesondere ist eine gleichmäßige Beabstandung der Abschnitte 148 zueinander in Längsrichtung L der Rotorblattes 108 vorgesehen.

**Patentansprüche**

1. Verfahren zur Bestimmung einer den dynamischen Auftrieb beeinflussenden Anströmsituation an wenigstens einem Rotorblatt (108) für einen Rotor (106) einer Windenergieanlage (100), wobei das Rotorblatt (108) ein Profil mit einer Profiltiefe (T) aufweist und zwischen einer Vorderkante (120) und einer Hinterkante (122) des Profils eine Druckseite (126) und eine Saugseite (124) ausgebildet wird, **dadurch gekennzeichnet, dass** in wenigstens einem Abschnitt (148) des Rotorblattes (108) in Längsrichtung (L) an der Rotorblattoberfläche entlang einer Profilsehne (132) des Rotorblattes (108) an zumindest drei zueinander beabstandeten Druckmessstellen (138, 140, 142) jeweils eine Druckmessung durchgeführt wird, dass mittels eines numerischen Verfahrens oder durch Messungen über den Verlauf des Profils des Rotorblattes (108) auftretende Druckbeiwerte (cp1, cp2, cp3) bestimmt werden, und dass aufgrund der durchgeführten Druckmessungen und der bestimmten Druckbeiwerte (cp1, cp2, cp3) für die jeweilige Druckmessstelle (138, 140, 142) wenigstens eine Anströmgeschwindigkeit (134) und ein Anströmwinkel (136) bestimmt werden.

2. Verfahren nach Anspruch 1, **dadurch gekennzeichnet, dass** die Verteilung von Druckbeiwerten (cp1, cp2, cp3) über den Verlauf des Profils anhand von mehreren im Betrieb der Windenergieanlage (100) zu erwartenden Anströmgeschwindigkeiten (134') und/oder Anströmwinkeln (136') bestimmt wird, insbesondere mittels einer numerischen Simulation bestimmt wird.

3. Verfahren nach Anspruch 1 oder 2, wobei aufgrund der durchgeführten Druckmessungen und der bestimmten Druckbeiwerte (cp1, cp2, cp3) für die jeweilige Druckmessstelle (138, 140, 142) zwei Differenzdrücke (D1, D2) bestimmt werden, wobei die Anströmgeschwindigkeit (134) und der Anströmwinkel (136) basierend auf den Differenzdrücken (D1, D2) bestimmt werden.

4. Verfahren nach Anspruch 3, **dadurch gekennzeichnet, dass** ein Kennfeld (146) für die Anströmgeschwindigkeit (134') und ein Kennfeld (144) für den Anströmwinkel (136') erstellt werden, wobei die Eingangsgrößen des jeweiligen Kennfeldes (144, 146) die bestimmten Differenzdrücke (D1, D2) sind.

5. Verfahren nach einem der vorstehenden Ansprüche, **dadurch gekennzeichnet, dass** zumindest drei der zumindest drei Druckmessungen auf der Saugseite (124) des Rotorblattes (108) durchgeführt werden.

6. Verfahren nach einem der vorstehenden Ansprüche, **dadurch gekennzeichnet, dass** eine erste Druckmessstelle (138) mit einem Abstand von 5% bis 25% der Profiltiefe (T) zur Vorderkante (120) des Rotorblattes (108) angeordnet wird.

7. Verfahren nach Anspruch 6, **dadurch gekennzeichnet, dass** eine zweite Druckmessstelle (140) mit einem Abstand von 10 bis 30% der Profiltiefe (T) zu der ersten Druckmessstelle (138) beabstandet angeordnet wird, wobei insbesondere die erste Druckmessstelle (138) und die zweite Druckmessstelle (140) innerhalb eines Bereiches von 50% der Profiltiefe (T) angeordnet werden.

8. Verfahren nach einem der Ansprüche 6 oder 7, **dadurch gekennzeichnet, dass** eine dritte Druckmessstelle (142) in einem Bereich von 10%, vorzugsweise in einem Bereich von höchstens 5%, der Profiltiefe (T) zur Hinterkante (122) beabstandet angeordnet wird.

9. Verfahren nach einem der Ansprüche 7 oder 8, **dadurch gekennzeichnet, dass** die Anordnung der zumindest drei Druckmessstellen (138, 140, 142) derart gewählt wird, dass eine Maximierung der Fläche der Kennfelder (144, 146) erreicht wird.

10. Verfahren nach einem der vorstehenden Ansprüche, **dadurch gekennzeichnet, dass** das Verfahren für mehrere Abschnitte (148) des Rotorblattes (108) an unterschiedlichen Positionen in Längsrichtung (L) ausgeführt wird, wobei die Anordnung der Druckmessstellen (138, 140, 142) insbesondere an den jeweiligen Abschnitten (148) des Rotorblattes (108) an unterschiedlichen Positionen in Projektion auf die Profilsehne (132) vorgesehen ist.

**11.** Windenergieanlage (108), umfassend einen aerodynamischen Rotor (106) mit in ihrem Blattwinkel verstellbaren Rotorblättern (108) sowie einer Einrichtung (200) zum Steuern und/oder Regeln, **dadurch gekennzeichnet, dass** die Einrichtung (200) dazu eingerichtet ist, zumindest die Rotorblatteinstellwinkel der Rotorblätter (108) in Abhängigkeit von einer Anströmgeschwindigkeit (134) und einem Anströmwinkel (136) einzustellen, die nach einem Verfahren gemäß wenigstens einem der Ansprüche 1 bis 10 bestimmt worden sind.

**12.** Windenergieanlage (100) nach Anspruch 11, **dadurch gekennzeichnet, dass** der Rotor (106) wenigstens ein Rotorblatt (108) aufweist, wobei das Rotorblatt (108) ein Profil mit einer Profiltiefe (T) aufweist und zwischen einer Vorderkante (120) und einer Hinterkante (122) des Profils eine Druckseite (126) und eine Saugseite (124) ausgebildet ist, **dadurch gekennzeichnet, dass** entlang einer Profilsehne (138) des Rotorblattes (108) zumindest drei mit einem Abstand zueinander angeordnete Druckmessstellen (138, 140, 142) vorgesehen sind, dass mittels eines numerischen Verfahrens über den Verlauf des Profils des Rotorblattes auftretende Druckbeiwerte (cp1, cp2, cp3) bestimmbar sind, und dass aufgrund der durchgeführten Druckmessungen und der für die jeweilige Druckmessstelle bestimmten Druckbeiwerte (cp1, cp2, cp3) zwei Differenzdrücke (D1, D2) bestimmbar sind, mittels derer eine den dynamischen Auftrieb beeinflussende Anströmsituation an dem Rotorblatt (108) bestimmbar ist..

**13.** Windenergieanlage (100) nach Anspruch 12, **dadurch gekennzeichnet, dass** zumindest drei der zumindest drei Druckmessstellen (138, 140, 142) auf der Saugseite (124) des Rotorblattes (108) angeordnet sind.

**14.** Windpark mit mehreren Windenergieanlagen (100) nach einem der Ansprüche 11 bis 13.

**Claims**

**1.** Method for determining an incident flow situation which influences the dynamic lift on at least one rotor blade (108) for a rotor (106) of a wind turbine (100), wherein the rotor blade (108) has a profile having a profile depth (T) and a pressure side (126) and an intake side (124) are formed between a front edge (120) and a rear edge (122) of the profile, **characterised in that** in at least one portion (148) of the rotor blade (108) in the longitudinal direction (L) at the rotor blade surface along a chord (132) of the rotor blade (108) at least at three pressure measurement locations (138, 140, 142) which are spaced apart from each other a pressure measurement is carried out, **in that** by means of a digital method or by means of measurements pressure coefficients (cp1, cp2, cp3) which occur over the path of the profile of the rotor blade (108) are determined, and **in that** as a result of the pressure measurements which are carried out and the pressure coefficients (cp1, cp2, cp3) determined for the respective pressure measurement location (138, 140, 142) at least one incident flow speed (134) and one incident flow angle (136) are determined.

**2.** Method according to claim 1, **characterised in that** the distribution of pressure coefficients (cp1, cp2, cp3) over the path of the profile is determined on the basis of a plurality of incident flow speeds (134') and/or incident flow angles (136') which may be anticipated during operation of the wind turbine (100), in particular is determined by means of a digital simulation.

**3.** Method according to claim 1 or 2, wherein, as a result of the pressure measurements which have been carried out and the determined pressure coefficients (cp1, cp2, cp3) for the respective pressure measurement location (138, 140, 142), two differential pressures (D1, D2) are determined, wherein the incident flow speed (134) and the incident flow angle (136) are determined based on the differential pressures (D1, D2).

**4.** Method according to claim 3, **characterised in that** a characteristic diagram (146) for the incident flow speed (134') and a characteristic diagram (144) for the incident flow angle (136') are produced, wherein the input variables of the respective characteristic diagram (144, 146) are the determined differential pressures (D1, D2).

**5.** Method according to any one of the preceding claims, **characterised in that** at least three of the at least three pressure measurements are carried out at the intake side (124) of the rotor blade (108).

**6.** Method according to any one of the preceding claims, **characterised in that** a first pressure measurement location (138) is arranged with a spacing of from 5% to 25% of the profile depth (T) with respect to the front edge (120) of the rotor blade (108).

**7.** Method according to claim 6, **characterised in that** a second pressure measurement location (140) is arranged with a spacing of from 10 to 30% of the profile depth (T) with respect to the first pressure measurement location (138), wherein in particular the first pressure measurement location (138) and the second pressure measurement location (140) are arranged within a range of 50% of the profile depth (T).

8. Method according to either claim 6 or claim 7, **characterised in that** a third pressure measurement location (142) is arranged in a range of 10%, preferably in a range of a maximum of 5%, of the profile depth (T) with respect to the rear edge (122).

9. Method according to either claim 7 or claim 8, **characterised in that** the arrangement of the at least three pressure measurement locations (138, 140, 142) is selected in such a manner that a maximisation of the surface-area of the characteristic diagrams (144, 146) is achieved.

10. Method according to any one of the preceding claims, **characterised in that** the method is carried out for a plurality of portions (148) of the rotor blade (108) at different positions in the longitudinal direction (L), wherein the arrangement of the pressure measurement locations (138, 140, 142) in particular at the respective portions (148) of the rotor blade (108) is provided at different positions in a state projected onto the chord (132).

11. Wind turbine (108), comprising an aerodynamic rotor (106) having rotor blades (108) which can be adjusted in terms of their blade angle and a device (200) for controlling and/or regulating, **characterised in that** the device (200) is configured to adjust at least the rotor blade adjustment angles of the rotor blades (108) in accordance with an incident flow speed (134) and an incident flow angle (136) which have been determined in accordance with a method according to at least one of claims 1 to 10.

12. Wind turbine (100) according to claim 11, **characterised in that** the rotor (106) has at least one rotor blade (108), wherein the rotor blade (108) has a profile having a profile depth (T) and a pressure side (126) and an intake side (124) are formed between a front edge (120) and a rear edge (122) of the profile, **characterised in that** along a chord (138) of the rotor blade (108) at least three pressure measurement locations (138, 140, 142) which are arranged with spacing from each other are provided, **in that** by means of a digital method pressure coefficients (cp1, cp2, cp3) which occur over the path of the profile of the rotor blade can be determined, and **in that**, as a result of the pressure measurements which are carried out and the pressure coefficients (cp1, cp2, cp3) determined for the respective pressure measurement location, two differential pressures (D1, D2), by means of which an incident flow situation which determines the dynamic lift on the rotor blade (108) can be determined, can be determined.

13. Wind turbine (100) according to claim 12, **characterised in that** at least three of the at least three pressure measurement locations (138, 140, 142) are arranged at the intake side (124) of the rotor blade (108).

14. Wind park having a plurality of wind turbines (100) according to any one of claims 11 to 13.

**Revendications**

1. Procédé de détermination d'une situation d'écoulement influençant la portance dynamique au niveau d'au moins une pale de rotor (108) pour un rotor (106) d'une éolienne (100), dans lequel la pale de rotor (108) présente un profil avec une profondeur de profil (T) et un intrados (126) et un extrados (124) sont réalisés entre un bord d'attaque (120) et un bord de fuite (122) du profil, **caractérisé en ce que** dans au moins une section (148) de la pale de rotor (108) dans le sens longitudinal (L) au niveau de la surface de pale de rotor le long d'une corde de profil (132) de la pale de rotor (108) respectivement une mesure de pression est réalisée sur au moins trois points de mesure de pression (138, 140, 142) espacés les uns des autres, que des coefficients de pression (cp1, cp2, cp3) sont déterminés au moyen d'un procédé numérique ou par des mesures sur l'évolution du profil de la pale de rotor (108), et qu'au moins une vitesse d'écoulement (134) et un angle d'écoulement (136) sont déterminés sur la base des mesures de pression réalisées et des coefficients de pression (cp1 ,cp2, cp3) déterminés pour le point de mesure de pression (138, 140, 142) respectif.

2. Procédé selon la revendication 1, **caractérisé en ce que** la répartition de coefficients de pression (cp1, cp2, cp3) sur l'évolution du profil est déterminée à l'aide de plusieurs vitesses d'écoulement (134') et/ou angles d'écoulement (136') à attendre dans la zone de l'éolienne (100), en particulier est déterminée au moyen d'une simulation numérique.

3. Procédé selon la revendication 1 ou 2, dans lequel deux pressions différentielles (D1, D2) sont déterminées sur la base des mesures de pression réalisées et des coefficients de pression (cp1, cp2, cp3) déterminés pour le point de mesure de pression (138, 140, 142) respectif, dans lequel la vitesse d'écoulement (134) et l'angle d'écoulement (136) sont déterminés sur la base des pressions différentielles (D1, D2).

4. Procédé selon la revendication 3, **caractérisé en ce qu'**un champ caractéristique (146) pour la vitesse d'écoulement (134') et un champ caractéristique (144) pour l'angle d'écoulement (136') sont créés, dans lequel les grandeurs d'entrée du champ caractéristique (144, 146) respectif sont les pressions différentielles (D1, D2) déterminées.

5. Procédé selon l'une quelconque des revendications précédentes, **caractérisé en ce qu'**au moins trois des au moins trois mesures de pression sont réalisées sur l'extrados (124) de la pale de rotor (108).

6. Procédé selon l'une quelconque des revendications précédentes, **caractérisé en ce qu'**un premier point de mesure de pression (138) est agencé à une distance de 5 % à 25 % de la profondeur de profil (T) par rapport au bord d'attaque (120) de la pale de rotor (108).

7. Procédé selon la revendication 6, **caractérisé en ce qu'**un deuxième point de mesure de pression (140) est agencé espacé du premier point de mesure de pression (138) à une distance de 10 à 30 % de la profondeur de profil (T), dans lequel en particulier le premier point de mesure de pression (138) et le deuxième point de mesure de pression (140) sont agencés dans une plage de 50 % de la profondeur de profil (T).

8. Procédé selon l'une quelconque des revendications 6 ou 7, **caractérisé en ce qu'**un troisième point de mesure de pression (142) est agencé espacé du bord de fuite (122) dans une plage de 10 %, de préférence dans une plage d'au plus 5 %, de la profondeur de profil (T).

9. Procédé selon l'une quelconque des revendications 7 ou 8, **caractérisé en ce que** l'agencement des au moins trois points de mesure de pression (138, 140, 142) est choisi de telle manière qu'une maximisation de la surface des champs caractéristiques (144, 146) soit atteinte.

10. Procédé selon l'une quelconque des revendications précédentes, **caractérisé en ce que** le procédé pour plusieurs sections (148) de la pale de rotor (108) est réalisé dans différentes positions dans le sens longitudinal (L) , dans lequel l'agencement des points de mesure de pression (138, 140, 142) est prévu en particulier au niveau des sections (148) respectives de la pale de rotor (108) dans différentes positions en projection sur la corde de profil (132).

11. Eolienne (108) comprenant un rotor (106) aérodynamique avec des pales de rotor (108) réglables dans leur angle de pale ainsi qu'un système (200) pour la commande et/ou la régulation, **caractérisée en ce que** le système (200) est conçu afin de régler au moins les angles de réglage de pale de rotor des pales de rotor (108) en fonction d'une vitesse d'écoulement (134) et d'un angle d'écoulement (136) qui ont été déterminés selon un procédé selon au moins l'une quelconque des revendications 1 à 10.

12. Eolienne (100) selon la revendication 11, **caractérisée en ce que** le rotor (106) présente au moins une pale de rotor (108), dans laquelle la pale de rotor (108) présente un profil avec une profondeur de profil (T) et un intrados (126) et un extrados (124) sont réalisés entre un bord d'attaque (120) et un bord de fuite (122) du profil, **caractérisée en ce qu'**au moins trois points de mesure de pression (138, 140, 142) agencés à une distance les uns des autres sont prévus le long d'une corde de profil (138) de la pale de rotor (108), que des coefficients de pression (cp1, cp2, cp3) survenant sur l'évolution du profil de la pale de rotor peuvent être déterminés au moyen d'un procédé numérique, et que deux pressions différentielles (D1, D2) peuvent être déterminées sur la base des mesures de pression réalisées et des coefficients de pression (cp1, cp2, cp3) déterminés pour le point de mesure de pression respectif, au moyen desquelles une situation d'écoulement influençant la portance dynamique peut être déterminée au niveau de la pale de rotor.

13. Eolienne (100) selon la revendication 12, **caractérisée en ce qu'**au moins trois des au moins trois points de mesure de pression (138, 140, 142) sont agencés sur l'extrados (124) de la pale de rotor (108).

14. Parc éolien avec plusieurs éoliennes (100) selon l'une quelconque des revendications 11 à 13.

Fig. 1

Fig. 2

Fig. 3

EP 3 715 627 B1

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102013103150 A1
- EP 2148088 A1
- WO 2006039903 A1
- WO 2015185720 A1